(19) **Europäisches Patentamt / European Patent Office / Office européen des brevets**

(11) **EP 2 009 067 B1**

(12) **EUROPEAN PATENT SPECIFICATION**

(45) Date of publication and mention of the grant of the patent:
**25.01.2012 Bulletin 2012/04**

(51) Int Cl.:
**C09C 3/06** *(2006.01)*       **C09C 1/00** *(2006.01)*
**C09D 11/00** *(2006.01)*

(21) Application number: **07741292.2**

(22) Date of filing: **09.04.2007**

(86) International application number:
**PCT/JP2007/057856**

(87) International publication number:
**WO 2007/117004 (18.10.2007 Gazette 2007/42)**

(54) **PHOTOLUMINESCENT PIGMENT, METHOD FOR PRODUCTION OF THE PIGMENT, AND COSMETIC, COATING, INK OR RESIN COMPOSITION COMPRISING THE PIGMENT**

PHOTOLUMINESZENZPIGMENT, VERFAHREN ZUR HERSTELLUNG DES PIGMENTS UND DAS PIGMENT ENTHALTENDE KOSMETISCHE, BESCHICHTUNGS-, TINTEN- ODER HARZZUSAMMENSETZUNG

PIGMENT PHOTOLUMINESCENT, PROCÉDÉ DE PRODUCTION DUDIT PIGMENT ET COMPOSITION COSMÉTIQUE, DE REVÊTEMENT, D'ENCRE OU DE RÉSINE CONTENANT LEDIT PIGMENT

(84) Designated Contracting States:
**DE FR GB IT**

(30) Priority: **07.04.2006 JP 2006106480**

(43) Date of publication of application:
**31.12.2008 Bulletin 2009/01**

(73) Proprietor: **Nippon Sheet Glass Company, Limited Tokyo 108-6321 (JP)**

(72) Inventor: **KITAMURA, Takeaki Minato-ku Tokyo, 108-6321, (JP)**

(74) Representative: **Golding, Louise Ann**
**Dehns**
**St Bride's House**
**10 Salisbury Square**
**London**
**EC4Y 8JD (GB)**

(56) References cited:
**EP-A- 0 351 932        EP-A- 1 707 599**
**WO-A-03/037992        JP-A- 63 096 112**
**JP-A- 2003 509 530     JP-A- 2004 323 555**

## Description

Technical Field

The present invention relates to a bright pigment and a method for producing the same; a cosmetic, a paint, an ink or a resin composition including the bright pigment.

Background Art

As an example of a bright pigment, a metallic pigment prepared by covering a scaly base with a metal layer, and an application thereof have been known.

For example, Patent document 1 discloses a bright pigment formed by applying a metallic coating having a thickness of 50 to 200 Å on a surface of a glass flake by sputtering. The metallic coating includes Au, Ag, Cu, Al or an alloy thereof. The metallic coating has a thickness of 50 to 200 Å.

Patent document 2 discloses a silver-color metallic pigment formed by coating a powdery pigment base material such as glass flakes and mica with a silver alloy. The silver alloy includes one or plural kinds of elements selected from the group consisting of Al, Cr, Ni, Ti and Mg in a range of 0.5 to 10 weight %. The coating layer made of the silver alloy is formed by physical vacuum deposition.

Patent document 3 discloses a bright pigment formed by coating a powdery pigment base material such as glass flakes and mica with a silver alloy including Sn and at least one or plural elements selected from the group consisting of Al, Cr, Ni, Ti and Mg. The coating layer made of the silver alloy is formed by physical vacuum deposition.

Patent document 4 discloses a bright cosmetic containing bright scaly particles having flat metallic surfaces. The metal forming the metallic surfaces is a metal selected from silver, gold, nickel, aluminum or an alloy thereof. The basic material for the particles is, for example, glass flake particles, inorganic particles such as mica particles coated with iron oxide (III), a resin film powder, and a multilayer film powder.

Patent document 5 discloses bright cosmetic formed by coating a laminar substrate with a coating including silver or gold. The coating includes rhodium, and the content of the rhodium in the coating is about 2 weight % or less. Examples of suitable materials for the laminar substrate include mica, talc, glass, and kaolin.

Patent document 1: JP H09-188830 A
Patent document 2: JP H10-158540 A
Patent document 3: JP H10-158541 A
Patent document 4: JP 2001-270805 A
Patent document 5: JP 2003-509530 A

Disclosure of Invention

Problem to be Solved by the Invention

Silver has an extremely high reflectance for visible light. Therefore, a bright pigment formed by covering a scaly base with a coating of silver has a high luminance. With respect to silver, however, the reflectance of light at the short wavelength side (not more than 500 nm) of the visible light is lower than the reflectance of the light at the long wavelength side (more than 500 nm and not more than 700 nm). This causes a problem of the color developed by the bright pigment becoming yellowish. A problem for a bright pigment prepared by forming further a coating including an organic colorant on the coating of silver is that the color becomes yellowish, since the light reflected by the silver is yellowish.

The present invention provides a bright pigment that suppresses development of yellowish color. The present invention provides also a cosmetic, a paint, an ink, or a resin composition including the bright pigment. Means for Solving Problem

A first bright pigment of the present invention includes: a scaly inorganic base; and a silverbased alloy coating that covers the inorganic base and that includes silver and at least one noble metal selected from the group consisting of gold, palladium and platinum. The content of the noble metal is in a range of 0.1 to 2 atomic% when the sum of the atomic% of the silver and the atomic% of the noble metal in the silver-based alloy coating is 100 atomic%.

A cosmetic of the present invention contains the first bright pigment of the present invention.

A paint of the present invention contains the first bright pigment of the present invention.

An ink of the present invention contains the first bright pigment of the present invention.

A resin composition of the present invention contains the first bright pigment of the present invention.

A first method for producing a bright pigment of the present invention includes steps of forming a first coating that covers the inorganic base and that includes silver; forming a second coating that covers the first coating and that includes silver and at least one noble metal selected from the group consisting of gold, palladium and platinum; heating the first coating and the second coating for a predetermined time period under a predetermined temperature atmosphere so as to substitute atoms at lattice points of the silver with atoms of the noble metal, thereby forming the silver-based alloy coating. The content of the noble metal is in a range of 0.1 to 2 atomic% when the sum of the atomic% of the silver and the atomic% of the noble metal in the silver-based alloy coating is 100 atomic%.

A second bright pigment of the present invention is a bright pigment used as a material of an ink that is printed on an object to be exposed to a high temperature-humidity environment and exposed together with the object to the high temperature-humidity environment, the bright pigment comprising: a scaly inorganic base; a first coating that covers the inorganic base and comprises silver; and a second coating that covers the first coating and that comprises silver and at least one noble metal selected from the group consisting of gold, palladium and silver. The content of the noble metal is in a range of 0.1 to 2 atomic% when the sum of the atomic% of the silver contained in the first coating, the atomic% of the silver contained in the second coating and the atomic% of the noble metal is 100 atomic%.

An ink of the present invention contains the second bright pigment of the present invention.

Brief Description of Drawings

[FIG. 1] FIG. 1 is a schematic cross-sectional view showing an embodiment of a first bright pigment of the present invention.
[FIG. 2] FIG. 2 is a schematic cross-sectional view showing another embodiment of the first bright pigment of the present invention.
[FIG. 3] FIG. 3 is a schematic cross-sectional view showing an embodiment of a second bright pigment of the present invention.
[FIG. 4] FIG. 4 is a schematic cross-sectional view showing another embodiment of the second bright pigment of the present invention.
[FIG. 5] FIG. 5 is a view for explaining measurement of a reflection color tone.

Description of the Invention

The inventors made a study for preventing the reflected light of silver from turning yellowish and whitening the reflected light of silver. When the crystal structure of silver is heated, lattice defects are formed due to atomic diffusion. It is known that, under a high-humidity environment where the humidity is for example 80%RH (relative humidity) or more, the diffusion is promoted and the silver atoms move to the grain boundary even when the heating temperature is in a range of about 80 to about 200°C, and thus the crystal grains grow. Similarly, even not exposed to the high humidity environment, the crystal grains grow when the heating temperature is as high as 300°C or higher. When the crystal grains grow, the reflected light of silver will be more whitish. However, when the crystal grains become too large, aggregation of silver occurs, and the smoothness of the surface of the silver coating is sacrificed. As a result, the reflectance is decreased and the metallic luster deteriorates.

The above-mentioned temperature is measured by using a thermoelectric thermometer, and the humidity is measured by using a ceramic sensor type hygrometer.

The inventors found that the growth of silver crystal grains is controlled suitably by adding a predetermined amount of a predetermined noble metal to a silver matrix and substituting the silver atoms with the atoms of the noble metal. Thereby, the inventors provided a bright pigment having a high reflectance for light at a short wavelength side (500 nm or less) of the visible light so as to prevent the reflected light from turning yellowish, and suppressing degradation in the metallic luster.

According to the inventors' assumption, the silver atoms are substituted by the noble metal atoms, and the thus substituted noble metal atoms suppress the movement of the silver atoms, thereby suppressing the overgrowth of the silver crystal grains. It should be noted that the present invention is not restricted by the deduction.

The bright pigment of the present invention exhibits a silver-white color tone with suppressed yellow, and the luminance is high. As a result, a bright pigment that has further a colored coating including an organic colorant exhibits vivid colors with high chroma.

(Applications)

The first bright pigment of the present invention can be applied to various purposes. For example, it is added to cosmetics, ink, paint, resin compositions and the like in use. When the ink, paint, resin composition or the like includes not only the first bright pigment but an organic colorant, the surface printed with the ink, the surface applied with the paint, or the surface of a mold/cast formed by using the resin composition exhibit vivid colors with high chroma.

Examples of the cosmetics include facial cosmetics, make-up cosmetics, and hair cosmetics. In particular, the bright pigment of the present embodiment is used suitably for make-up cosmetics such as foundations like a makeup base and face powders, eye shadows, nail enamels, eye liners, mascaras, lipsticks, and lamé powders. Though the forms of the cosmetics are not limited particularly, the examples include a powder, a cake, a pencil, a stick, an ointment, a liquid, an emulsion, and a cream.

Objects to be printed with the ink include packages, wrapping papers, wallpapers, cloths, panels, textiles, various films, labels and the like.

Fields to be applied with the paint include: bodies of automobiles, motorbikes, bicycles and the like; construction materials; roof tiles; furniture; household appliances; containers; stationeries; sports goods and the like.

Molds/casts formed by using the resin compositions include cosmetic containers, food containers, wall materials, floor materials, cases for household electric appliances, accessories, stationeries, toys, bathtubs, bath equipment, shoes, sport goods, toilet goods and the like.

The first bright pigment can be used not only for the above-mentioned applications but also as materials of pigments for water colors, oil colors, genuine leathers, artificial leathers, textile printing, buttons, lacquer ware, ceramic ware and the like.

The first bright pigment is used particularly preferably as a material of ink to be printed on the outer surface of an object to be exposed to a high humidity-temperature environment and to be heat-sterilized together with the object. An example of the object is a container (can) for beverage to be heat-sterilized.

A second bright pigment is used, for example, as an ink material. When an ink that contains the second bright pigment is used, for example, for coloring the outer surface of the object, the silver crystal grains grow during the heat-sterilization. However, since a second coating includes at least one noble metal selected from the group consisting of gold, palladium and platinum, overgrowth of the silver crystal grains in the second coating is suppressed. Further, since the noble metal atoms are diffused due to the heat and included also in the first coating, the growth of the silver crystal grains in the first coating will be suppressed appropriately as well.

An atomic radius of silver is 1.44 Å, and the crystal structure is a face-centered cubic lattice. Gold, palladium, and platinum have atomic radii in a range of 1.37 to 1.5 Å that are similar to the atomic radius of silver. In addition to that, the crystal structures of gold, palladium and platinum are respectively face-centered cubic lattices, similarly to silver. Therefore, gold, palladium and platinum are heated together with the silver at a comparatively low temperature for example (at a temperature lower than the melting point of a metal having the lowest melting point among these metals for example), thereby these metals can form substitutional solid solutions without changing the crystal structures.

A substance can be evaluated as to whether it is a substitutional solid solution or not by an assay using XPS (X-ray Photoelectron Spectroscope). Specifically, it can be checked based on the chemical shifts in the bond energy inherent to every element.

(Embodiment 1)

Embodiment 1 refers to the first bright pigment and a method for producing the same.

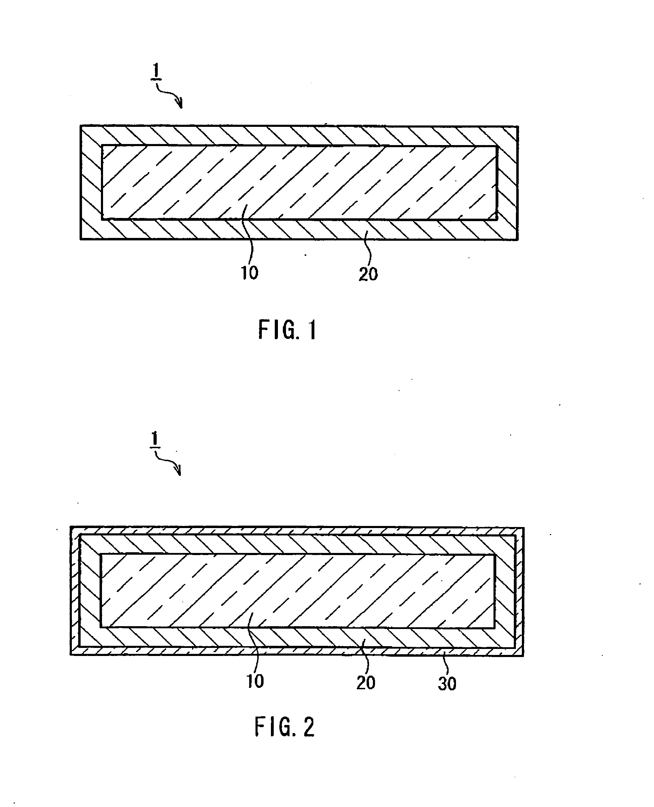

As shown in FIG. 1, a first bright pigment 1 of the present invention includes a scaly inorganic base 10 and a silver-based alloy coating 20 that covers the inorganic base. Alternatively, as shown in FIG. 2, the bright pigment 1 of the present invention is formed, by covering the scaly inorganic base 10 with the silver-based alloy coating 20 and a colored coating 30 in this order. The silver-based alloy coating 20 includes silver and at least one noble metal selected from the group consisting of gold, palladium and platinum.

(Scaly inorganic base)

The material of the scaly inorganic base 10 is for example, at least one material selected from the group consisting of glass, mica, synthetic mica, silica and alumina. Among them, glass is preferred since a smooth surface can be obtained easily.

The shape of the scaly inorganic base 10 varies depending on the application, without any particular limitations. In general, the average particle diameter is 1 μm to 500 μm, and the average thickness is 0.3 μm to 10 μm preferably. When the average particle diameter is extremely large, the scaly inorganic base 10 may be crushed at the time of blending the bright pigment in a paint, a resin composition or the like. When the average particle diameter is extremely small, the principal planes of the bright pigment (particles) may be oriented randomly in the coating film or the resin mold/cast, and the reflected light from every particle may be weakened. As a result, the bright appearance will be sacrificed. When the average particle diameter is in a range of 1 μm to 500 μm, the bright pigment will not be crushed during the blending process, and the bright appearance can be improved.

When a bright pigment of the present invention is used for cosmetics for example, the average particle diameter of the scaly inorganic base 10 can be selected suitably according to the type or the like of the cosmetics. Preferably it is in a range of 20 μm to 500 μm, and more preferably in a range of 20 μm to 250 μm. When the average particle diameter is in the range of 20 μm to 500 μm, it is possible to achieve a cosmetic whose particles have strong luminance and hence stronger glitter.

It is preferable that the average thickness of the scaly inorganic base 10 is in a range of 0.5 μm to 7 μm, and more preferably 0.5 μm to 3 μm. An average thickness in a range of 0.5 μm to 7 μm is preferred, since a cosmetic including the bright pigment of the present invention exhibits favorable extensibility and feeling in use on the surface of keratin composing the stratum corneum of skin, nails, lips and the like.

When a bright pigment of the present invention is used for an ink for example, preferably the average particle diameter of the scaly inorganic base 10 is in a range of 1 μm to 40 μm, and more preferably 15 μm to 35 μm. For example, for printing the ink by a method such as gravure printing, problems in printability (e.g., plate fogging) can be prevented. Here, 'plate fogging' denotes a phenomenon in which the ink on the block copy cannot be raked sufficiently by a doctor blade, and thus the ink is transcribed on a print target and causes scumming of the printed matter.

It is preferable that the average thickness of the scaly inorganic base 10 is in a range of 0.3 μm to 3 μm. When the average thickness of the scaly inorganic base 10 is in a range of 0.3 μm to 3 μm, the surface finishing in the printing becomes favorable.

Though there is no particular limitation on the method for producing a scaly glass base as an example of the scaly inorganic base 10, a blowing method is preferred for example. In the blowing method, a raw cullet is melted first. Molten glass is discharged continuously from a circular slit, and at the same time, a gas such as air is blown through a blow nozzle attached to the interior of the circular slit. Thereby, the molten glass is stretched and expanded to form a balloon. This balloon glass is crushed to obtain the scaly glass base.

A scaly glass base produced in the above-mentioned blowing has a smooth surface and thus it reflects light well. A bright pigment including this scaly glass base is blended preferably in paint, a resin composition or the like, thereby providing a painted surface or a resin mold/cast with a highly bright appearance. Examples of commercially available products of such a scaly glass base include a MICROGLAS (registered trademark) and GLASFLAKE (registered trademark) series (RCF-160, REF-160, RCF-015, REF-015).

(Silver-based alloy coating)

The silver-based alloy coating 20 includes at least one noble metal selected from the group consisting of gold, palladium, and platinum, in addition to silver. The content of the noble metal is in a range of 0.1 to 2 atomic%, when the sum of the atomic% of silver in the silver-based alloy coating 20 and atomic% of the noble metal in the silver-based alloy coating 20 is 100 atomic%. When the content of the noble metal is less than 0.1 atomic%, the crystal grains of the silver grow excessively, and thus the growth of the crystal grains cannot be suppressed suitably. When the content of the noble metal exceeds 2 atomic%, the colors of the noble metal will impose their influence. For example, when the noble metal includes gold, the silver-based alloy coating becomes yellowish. When the noble metal includes palladium, the silver-based alloy coating becomes reddish. And when the noble metal includes platinum, the silver-based alloy coating becomes bluish. The reflection color tone can be adjusted by varying the types and contents of the noble metals. More preferably the content of the noble metal is 0.2 to 1.5 atomic%, since the thus obtained silver-based alloy coating has a more vivid silver-white color and higher luminance.

It is preferable that the silver-based alloy coating 20 is made of a silver-gold alloy, a silver-palladium alloy, a silver-platinum alloy, a silver-gold palladium alloy, a silver-platinum-palladium alloy, or a silver-gold-platinum alloy

It is preferable that the thickness of the silver-based alloy coating 20 is in a range of 20 to 100 nm. Sufficient reflective light quantity can be obtained with the silver-based alloy coating 20 having a thickness of 20 to 100 nm.

The description below refers to a method of forming the silver-based alloy coating.

After forming a first coating including silver and a second coating including the noble metal and silver in this order, the first coating and the second coating are heated at a predetermined temperature for a predetermined time. As a result of this heating, the noble metal included in the second coating is diffused by heat and reaches the first coating so as to be diffused also in the first coating. The first coating includes silver, and substantially it can be formed of silver alone for example. Though the second coating includes silver and at least one noble metal selected from the group consisting of gold, palladium and platinum, it can be formed of substantially only the noble metal and silver.

The interface between the first coating and the second coating disappears for example by the heating, and the first coating and the second coating are integrated to form the silver-based alloy coating 20. According to this method, for example, the concentration of the noble metal can be increased easily on the outer surface (the surface opposite to the side facing the inorganic base) and in the vicinity thereof.

The temperature of the atmosphere for the heating is preferably for example in a range of 350 to 600°C from a viewpoint of allowing formation of a favorable substitutional solid solution and from a viewpoint of obtaining a bright pigment with high luminance. Though the heating time can be determined suitably according to the temperature of the atmosphere, it is preferred to be 0.1 hours to 10 hours in general.

The method for forming the first coating and the second coating is not limited particularly. Examples of the methods for forming these coatings include sputtering, CVD, electroless (chemical) deposition and the like. Among them, electroless (chemical) deposition is preferred since uniform films can be formed easily.

It is preferable that the second coating is in a range of 1 to 20 nm, namely, thinner than the first coating. As the second coating is thinner, luminance degradation caused by aggregation of silver can be suppressed effectively as a result of addition of a small amount of the noble metal that is more expensive than silver. For the thickness of the first coating, it is preferable that the sum of the thickness of the first coating and the second coating is set for example in a range of 20 to 100 nm. When the sum of the thickness of the first coating and the second coating is 20 to 100 nm, a sufficient reflective light quantity can be obtained.

For the electroless deposition solution, for example, the compounds below can be used for the metal materials.

(1) silver material: silver nitrate
(2) gold material: sulfurous acid gold (I) sodium, gold chloride (III) [tetrachloro -gold (III) quaternary hydrate]
(3) palladium material: diamino palladium nitrite, palladium chloride (II), palladium nitrite (II), tetraamine palladium (II) dichloride
(4) platinum material: platinum chloride (IV) acid [hexachloroplatinic (IV) acid hexahydrate], dinitrodiamine platinum (II), tetraamine dichloro platinum (II)

It is preferable that the use of cyanides is avoided in view of safety.

The method for forming the silver-based alloy coating is not limited to the above-mentioned methods. The silver-based alloy coating 20 can be formed, for example, by forming a single coating 'A' including the noble metal and silver and subsequently heating the coating for a predetermined time of 0.1 to 10 hours under an atmosphere of a predetermined temperature of 350 to 600°C for example. The method for forming the coating 'A' is not limited particularly, and it can be the same as the method of forming the first and second coatings.

There is no necessity for the noble metal to be diffused homogeneously in the silver-based alloy coating 20. The noble metal can be included in the silver-based alloy coating 20 with a concentration distribution in which the concentration of the noble metal is increased at a position closer to the outer surface (opposite to the inorganic base side) of the silver-based alloy coating 20. It is preferable that the concentration of the noble metal is increased at a position closer to the outer surface (opposite to the inorganic base side) of the silver-based alloy coating 20, since luminance degradation caused by aggregation of silver can be suppressed effectively by addition of a small amount of noble metal.

(Colored coating)

A colored coating 30 includes a parent material and a colorant retained by the parent material. Furthermore, the coloring coating 30 is required to transmit visible light. Visible light that has transmitted the colored coating reaches the silver-based alloy coating 20 and is reflected there. Due to this reflection, the bright pigment expresses high bright appearance.

An example of the parent material that allows transmission of the visible light is at least one material selected from the group consisting of aluminum hydroxide, zirconium hydroxide, calcium hydroxide, hydrated aluminum oxide, hydrated zirconium oxide, hydrated calcium oxide, silica, and hydrotalcite.

Among them, at least one material selected from the group consisting of aluminum hydroxide, hydrated aluminum oxide, zirconium hydroxide and hydrated zirconium oxide is preferred. These materials preferably are used as materials for laking the below-mentioned water-soluble colorant with respect to Al and/or Zr. These materials preferably are used also for materials to cover the scaly inorganic base since the transparency is extremely high.

Examples of the colorants include the water-soluble colorants or water-insoluble colorants stated below.

(Water-soluble colorants)

There is no particular limitation for the colors of the water-soluble colorants. The following colorants are the examples for yellow colorants, red colorants, blue colorants, orange colorants, green colorants, and black colorants.

Examples of water-soluble yellow colorants include Acid Yellow 1, Acid Yellow 3 (Food Yellow 13), Food Yellow 11, Acid Yellow 23 (Food Yellow 4), Acid Yellow 36, Acid Yellow 40, Acid Yellow 73, Acid Yellow 184, and Food Yellow 3, which are defined by Color Index Generic Name (hereinafter, abbreviated as C.I.G.N.).

Examples of water-soluble red colorants include Acid Red 92, Acid Red 33, Acid Red 87, Acid Red 51, Food Red 1, Acid Red 27, Acid Red 18, Acid Red 94, Acid Red 52, Acid Red 87, Acid Red 26, Food Red 6, Acid Red 88, Acid Violet 9, Acid Violet No.43, Pigment Red 57, and Pigment Red 57-1, which are defined by C.I.G.N.

Examples of water-soluble blue colorants include Food Blue 2, Acid Blue 74, Acid Blue 9, and Acid Blue 5, which are defined by C.I.G.N.

Examples of water-soluble orange colorants include Acid Orange 7, Acid Red 95, Acid Orange 20, and Acid Orange 24, which are defined by C.I.G.N.

Examples of water-soluble green colorants include Acid Green 25, Acid Green 5, Food Green, Acid Green 1, and Acid Green 3, which are defined by C.I.G.N.

Examples of water-soluble black colorants include Acid Black 1, which is defined by C.I.G.N.

(Water-insoluble colorants)

There is no particular limitation on the colors of the water-insoluble colorants. The following colorants are the examples for yellow colorants, red colorants, blue colorants, orange colorants, green colorants, and black colorants.

Examples of water-insoluble yellow colorants include Pigment Yellow 1, Pigment Yellow 3, Pigment Yellow 12, Pigment Yellow 13, Pigment Yellow 14, Pigment Yellow 16, Pigment Yellow 17, Pigment Yellow 42, Pigment Yellow 53, Pigment Yellow 73, Pigment Yellow 74, Pigment Yellow 81, Pigment Yellow 83, Pigment Yellow 97, Pigment Yellow 102, Pigment Yellow 111, Pigment Yellow 120, Pigment Yellow 126, Pigment Yellow 127, Pigment Yellow 139, Pigment Yellow 147, Pigment Yellow 151, Pigment Yellow 154, Pigment Yellow 155, Pigment Yellow 173, Pigment Yellow 174, Pigment Yellow 175, Pigment Yellow 176, Pigment Yellow, Pigment Yellow 181, Pigment Yellow 184, Pigment Yellow 191, Pigment Yellow 92, Pigment Yellow 194, Pigment Yellow 196, Pigment Yellow 213, Pigment Yellow 214, Solv. Yellow 5, and Solv. Yellow 6, which are defined by C.I.G.N.

Examples of water-insoluble red colorants include Pigment Red 2, Pigment Red 3, Pigment Red 4, Pigment Red 5, Pigment Red 9, Pigment Red 12, Pigment Red 14, Pigment 38, Pigment Red 48:2, Pigment Red 48:3, Pigment Red 48:4, Pigment Red 52:2, Pigment Red 53:1, Pigment Red 57:1, Pigment Red 101, Pigment Red 112, Pigment Red 122, Pigment Red 144, Pigment Red 146, Pigment Red 147, Pigment Red 149, Solv.Red 49, Solv.Red 48, Pig.Red 64, Pig.Red 63(Ca), Pig.Red 3, Solv.Red 43, Solv.Red 23, Vat Red 1, Pig.Red 4, Pig.Red 22, Pig.Red 48, Solv.Red 24, and Solv. Qrange 7, which are defined by C.I.G.N.

Examples of water-insoluble blue colorants include Pigment Blue 15, Pigment Blue 15:1, Pigment Blue 15:2, Pigment Blue 15:3, Pigment Blue 15:4, Pigment Blue 16, and Pigment Blue 28, which are defined by C.I.G.N.

Examples of water-insoluble orange colorants include Pigment Orange 5, Pigment Orange 13, Pigment Orange 34, Pigment Orange 36, Pigment Orange 38, Pigment Orange 43, Pigment Orange 62, and Pigment Orange 68, which are defined by C.I.G.N.

Examples of water-insoluble green colorants include Pigment Green 7, Pigment Green 17, Pigment Green 36, and Pigment Green 50, which are defined by C.I.G.N.

Examples of water-insoluble black colorants include Pigment Black 7, Pigment Black 11, and Pigment Black 33, which are defined by C.I.G.N.

There is no particular limitation on the method for forming a colored coating including a colorant, and such a coating can be formed by using a well-known method. Some examples of the method for forming such a colored coating will be described below.

<Method for forming a colored coating including a water-soluble colorant>

In a method for forming a colored coating including the above-mentioned water-soluble colorant, first, a parent material is formed by coating an object, for example, with a hydroxide such as aluminum hydroxide, zirconium hydroxide and the like. Next, a water-soluble colorant is penetrated into the parent material and then, the water-soluble colorant is laked. The water-soluble colorant is made to penetrate the parent material by, for example, slurrying the scaly inorganic base coated with the parent material in water and adding a water-soluble colorant into the slurry. The slurry including the water soluble colorant is heated so that the water soluble colorant is laked. The details of this process is disclosed, for example, in DE2429762, US4,084,983, JP 2002-188023 A, and JP 2002-194247 A.

According to these documents, for example, aluminum hydroxide can be obtained by reacting an acidic aluminum compound and a suitable alkali. Alternatively, the aluminum hydroxide can be obtained by reacting an alkaline aluminum compound and a suitable acid. By performing any of these reactions in a suspension obtained by adding a coating object including a scaly inorganic base into water, the aluminum hydroxide is deposited on the surface of the object, and thereby a parent material of aluminum hydroxide is formed.

Examples of the acidic aluminum compounds include water-soluble aluminum salts of mineral acids such as aluminum chloride, aluminum sulfate, aluminum nitrate and aluminum phosphate. Examples of the alkaline aluminum compounds include an alkali metal aluminate such as sodium aluminate. Examples of suitable alkalis include an aqueous solution of sodium hydroxide and an aqueous solution of ammonium hydroxide. Examples of suitable acids include hydrochloric acid, sulfuric acid and nitric acid.

The amount of the alkali or the acid in use can be set for depositing a sufficient amount of aluminum hydroxide on the surface of the coating object. The pH of the suspension during the reaction is kept constant within a range of 3 to 9, and the temperature of the suspension is kept in a range of 30 to 100°C, preferably 40 to 75°C. The suspension with constant pH and temperature is stirred for 5 minutes to 4 hours, preferably 30 minutes to 2 hours.

A preferable zirconium source is not limited particularly as long as it is a zirconium salt. The specific examples include zirconium compounds such as zirconium oxochloride, zirconium oxosulphate, zirconium oxonitrate, zirconium oxoacetate, zirconium alkoxide and the like. Though the zirconium source is a water-soluble zirconium compound more preferably, it can be a slurry solution including solid zirconium hydroxide obtained by hydrolyzing a zirconium compound. An example of the slurry solution is a slurry solution of zirconium hydroxide, which is obtained by hydrolyzing an aqueous solution of zirconium oxonitrate by using ammonium hydroxide or the like, and which is poor in water solubility.

A method for forming the parent material will be described below with reference to a case where the parent material is hydrotalcite.

Hydrotalcite is a lamellar crystallized compound in the form of divalent trivalent metal complex hydroxide, and it has anion-exchangeability.

The composition of the hydrotalcite compound coating including a water-soluble colorant is expressed with the Formula (expressed with oxide) below:

$$M^1_{1-x} \cdot M^2_x (OH)_2 \cdot X_{2/n} \cdot mH_2O$$

wherein x denotes a number in the range of $0.10 \leq x \leq 0.75$, X denotes a monovalent or divalent acidic colorant, n denotes a valence of 1 or 2, and m denotes a number in a range of $0 \leq m \leq 30$. $M^1$ denotes at least one kind of divalent metal selected from Mg, Mn, Fe, Co, Ni, Cu and Zn, and $M^2$ denotes at least one kind of trivalent metal selected from Al, Cr, Mn, Fe, Co and Ga.

A hydrotalcite compound coating including a dye (acidic colorant) is formed in the following manner, for example.

A $M^1$ salt, a $M^2$ salt, a coating object and an acidic colorant are added to water so as to prepare a suspension. The coating object is a scaly inorganic base covered with a silver-based alloy coating. This suspension is neutralized with an alkali, for example. Then, the object is covered with the hydrotalcite and at the same time, the acidic colorant is intercalated in the hydrotalcite parent material. The details of this process are disclosed in JP 2001-234090 A, and JP 2003-213156 A for example.

Examples of the $M^1$ salts include water-soluble salts such as chlorides, sulfates and nitrates of $M^1$. Examples of the $M^2$ salts include water-soluble salts such as chlorides, sulfates and nitrates of $M^2$. Examples of the alkalis include sodium hydroxide, potassium hydroxide and ammonium hydroxide.

It is preferable that the colored coating including the above-mentioned water-soluble colorant has a thickness in a range of 10 nm to 100 nm. Since a colored coating having a thickness of 10 nm to 100 nm can contain a suitable amount of colorant, preferable color tones and bright appearance can be realized in the bright pigment.

It is preferable that the content of the colorant in the colored coating is in a range of 0.1 to 20 mass%; more preferably, 1 to 15 mass%, and further preferably, 3 to 10 mass%, when the total weight of the bright pigment is 100 mass%.

<Method for forming a colored coating including water-insoluble colorant>

In an example of the method for forming a colored coating including water-insoluble colorant, first, a coating object is dispersed in a coating solution containing a hydrolytic organometallic compound that can be polycondensed and a water-insoluble colorant. The object is a scaly inorganic base covered with a silver-based alloy coating. By continuously stirring for 1 to 15 hours, the organometallic compound is hydrolyzed and polycondensed. In this manner, a coating including the water-insoluble colorant can be formed on the surface of the inorganic base. It is preferable that the amount of the object in the coating solution is in a range of 1 to 30 mass% when the total weight of the coating solution is 100 mass%.

Subsequently, the object covered with the colored coating is filtered, rinsed with water and dried. Heating process for drying is carried out preferably at room temperature to 200°C for 1 to 5 hours.

Preferable and specific examples for the organometallic compound include organosilicon compounds, organotitanium compounds, organozirconium compounds, and organoaluminum compounds. Among them, organosilicon compounds are preferred because of the high transmittance of visible light. When the organometallic compound includes an organosilicon compound, a silica-based coating is formed as the parent material. Details of the process are disclosed in, for example, JP H05-17105 A, JP H07-133211 A, JP 2006-176742 A and the like.

Though there is no particular limitation on the thickness of the colored coating, the preferred thickness is in a range of 10 nm to 500 nm from a viewpoint of maintaining favorable color tones, retaining securely the water-insoluble colorant, maintaining favorable surface smoothness of the coating, and cost reduction.

The silica-based coating is not limited particularly as long as it includes silica ($SiO_2$) as the main component;

it can include silica alone substantially. Alternatively, the silica-based coating can include titania, zirconia or the like for the purpose of adjusting the refractive index or improving the alkali-resistance of the coating.

Preferable and specific examples of the hydrolytic organosilicon compounds that can be polycondensed and that are included in the coating solution include: tetraalkoxysilanes such as tetramethoxysilane, tetraethoxysilane, tetrapropoxysilane, and tetrabutoxysilane; and methyltrialkoxysilanes such as methyltrimetoxysilane, methyltrietoxysilane, methyltripropoxysilane, and methytributoxysilane.

Among these examples, materials with relatively smaller molecular weights are preferred. For example, tetraalkoxysilane having an alkoxy group with a carbon number of not more than 3 is preferred since a dense coating can be formed easily. A polymer of the tetraalkoxysilane having an average degree of polymerization of not more than 5 is further preferable.

It is preferable that the coating solution contains for example, 0.5 to 20 mass% of organosilicon compound, and 0.01 to 5 mass% of water-insoluble colorant. In addition, the coating solution contains water and an alcoholic solvent for the purpose of hydrolysis.

The content of water in the coating solution is in a range of 0.1 to 20 mass% preferably.

Preferred examples of the alcoholic solvent include methyl alcohol, ethyl alcohol, 1-propyl alcohol, 2-propyl alcohol, butyl alcohol, amyl alcohol and the like. A chain saturated monohydric alcohol with carbon number of not more than 3 is preferred since the evaporation rate at room temperature is high. Examples of the chain saturated monohydric alcohol with carbon number of not more than 3 include methyl alcohol, ethyl alcohol, 1-propyl alcohol, 2-propyl alcohol and the like. The content of the alcoholic solvent in the coating solution is for example 50 to 98 mass%, preferably.

The coating solution can contain a catalyst. For the catalyst, alkali catalysts such as ammonium hydroxide, sodium hydroxide and the like are used preferably from a viewpoint ot accelerating hydrolysis and polycondensation of the organosilicon compound and allowing formation of the favorable colored coating on every particle (the scaly inorganic base covered with silver-based alloy coating). It is preferable that the content of the catalyst in the coating solution is in a range of 0.1 to 10 mass%.

An appropriate pH for the coating solution is in a range of 9 to 13.

Though the average particle diameter of the water-insoluble colorant is not limited particularly, preferably it is in a range of 10 nm to 500 nm. When the average particle diameter is extremely small, the durability of the coloring pigment will deteriorate considerably. When the average particle diameter is extremely large, reflected light will be shielded more by the colored pigment, and thus the bright appearance and the color tone will be degraded. '

Though the content of the water-insoluble colorant is not limited particularly, it is preferably in a range of 0.1 to 10 mass%, more preferably 1 to 5 mass% when the total amount of the bright pigment of the present invention is 100 mass%.

(Embodiment 2)

In Embodiment 2, a second bright pigment and a method for producing the same will be described.

The second bright pigment of the present invention is used, for example, for a material of ink to be printed on the outer surface of an object before heat sterilization and heated for sterilization with the object.

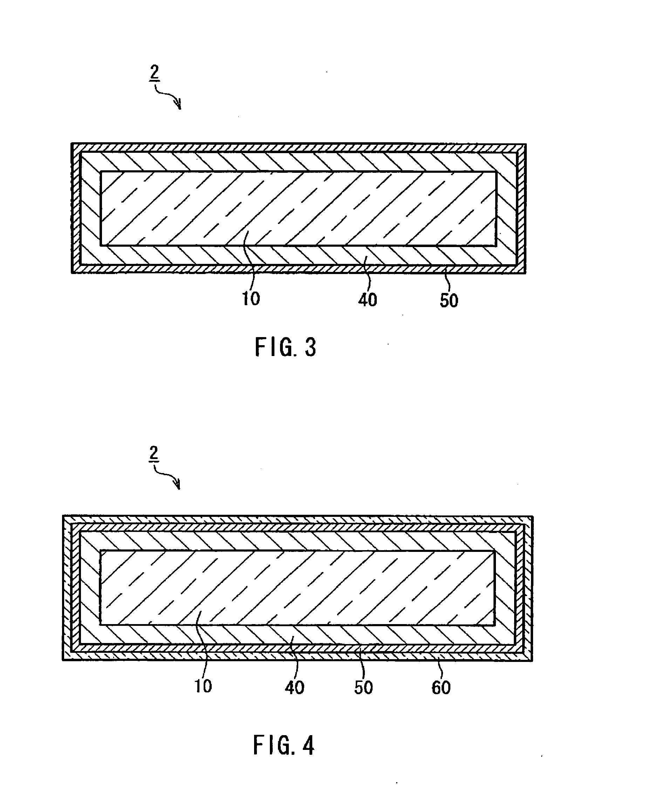

As shown in FIG. 3, the second bright pigment 2 of the present invention is prepared by covering a scaly inorganic base 10 with a first coating 40 and a second coating 50 in this order. More specifically as shown in FIG. 4, the second bright pigment 2 of the present invention is prepared by covering a scaly inorganic base 10 with a first coating 40, a second coating 50 and a colored coating 60 in this order. The first coating 40 includes silver, and for example, it can consist of silver alone substantially The second coating 50 includes silver and at least one noble metal selected from the group consisting of gold, palladium, and platinum. For example, it can be formed of only the above-mentioned noble metal and silver, substantially.

Similarly to the case of the noble metal in the first bright pigment, the content of the noble metal in the second bright pigment is in a range of 0.1 to 2 atomic%, and preferably 0.2 to 1.5 atomic%. Here, the sum of the atomic% of the silver included in the first coating 40, the silver included in the second coating 50, and the noble metal included in the first coating 40, is set to 100 atomic%. As a result, the luminance of the second bright pigment 2 does not deteriorate considerably even after exposure to a high temperature-humidity environment, and the color is prevented substantially from turning yellowish. The inventor deduces the reasons as follows.

For example, when the second bright pigment is kept in a heat sterilizer in use as an example of a high temperature-humidity environment, lattice defects are formed in the silver crystal structure due to diffusion of silver atoms. The thus diffused silver atoms move to a grain boundary, and the crystal grains grow there. Due to the growth of the crystal grains, the yellowish reflected light of the silver turns whitish. When the crystal grains are extremely large, surface smoothness of the silver coating will be sacrificed, and thus the metallic luster will be sacrificed. However, in the second bright pigment, due to the presence of the noble metal atoms substituting the silver atoms, the movement of the silver atoms is suppressed, and thus the growth of the silver crystal grains is controlled suitably. This mechanism is considered as serving to suppress the yellowish reflected light for the second bright pigment and also degradation of the metallic luster. It should be noted, however, that this deduction does not restrict the present invention.

In the second bright pigment exposed to the high temperature-humidity environment, for example, the interface between the first coating and the second coating has been extinguished, and the first coating and the second coating are integrated to form a silver-based alloy coating 20 (see FIG. 1) of a single layer.

(Scaly inorganic base)

The scaly inorganic base for forming the second bright pigment can be the substantially same as the scaly inorganic base for forming the first bright pigment.

(Second coating)

It is preferable that the second coating is in a range of 1 to 20 nm in thickness, namely, thinner than the first coating. Such a thinner second coating is preferred since degradation in the luminance caused by silver aggregation can be suppressed effectively by addition of a small amount of noble metal that is more expensive than silver. ,

(First coating)

The thickness of the first coating is determined preferably so that the sum of the thickness of the first coating and the thickness of the second coating will be in a range of 20 to 100 nm for example. When the sum of the thickness of the first coating and the thickness of the second coating is 20 to 100 nm, a sufficient amount of reflected light will be obtained.

The method for forming the first coating and the second coating is not limited particularly. Examples of the methods for forming these coatings include sputtering, CVD, electroless (chemical) plating and the like. Among them, electroless plating is preferred since a uniform film can be formed easily.

The metallic materials included in the electroless plating solution are substantially same as those of Embodiment 1.

(Colored coating)

The materials and method for forming the colored coating 30 are substantially the same as those of the first bright pigment.

Hereinafter, an embodiment of the present invention will be described in detail with reference to Examples and Comparative Examples.

The various average particle diameters were measured by using a laser diffraction type particle size meter.

The average thickness of a scaly glass base used as the scaly inorganic base was calculated by measuring thicknesses of 100 scaly glass bases and taking the mean value. The thickness of each scaly glass base was calculated by measuring the optical path difference between a direct light beam (a light beam not influenced by a phase object) and a light beam that has transmitted the scaly glass base, with use of an interference microscope.

The thickness of each coating was measured by using a SIMS (Secondary Ion-Microprobe Mass Spectrometer: IMS-6F manufactured by Cameca). Specifically, the thickness was determined based on the ingredient distribution from the surface of the bright pigment to the surface of the scaly glass base.

The atomic% of silver and the noble metals were calculated from conversion of mass measured by using Inductively Coupled Plasma (ICP) emission spectrophotometer (ICP7600 manufactured by Shimadzu Corporation).

(Example 1)

The bright pigment of Example 1 has a structure in which a scaly glass base is covered with a silver-based alloy coating, just like the example shown in FIG. 1. The silver-based alloy coating is made of silver-gold-palladium alloy. This bright pigment was produced in the following manner.

(Scaly glass base)

A scaly glass base having an average particle diameter of 32 $\mu$m and an average thickness of 1.3 $\mu$m was prepared. The scaly glass base was obtained by pulverizing a glass piece with a pulverizer (the glass piece had been formed from a molten glass by ballooning), and classifying the thus pulverized glass piece with a vibration sieve, an ultrasonic sieve, and an airflow classifier.

(Pretreatment)

Next, 0.7 g of stannous chloride was added to 1 L of pure water and dissolved, to which a dilute hydrochloric acid was added further to obtain a pretreatment solution for electroless plating with pH in a range of 2.0 to 2.2. After adding 100 g of scaly glass base to this pretreatment solution, the scaly glass base was taken out and rinsed with water. This process was repeated several times as a pretreatment of the scaly glass base.

(Formation of silver coating)

Next, on the pretreated scaly glass base, a silver coating (first coating) was formed by electroless plating in the following manner. First, 100 g of 25 mass% aqueous ammonia as a complexing agent, 10 g of sodium hydroxide as a pH regulator, and 30 g of silver nitrate as a silver material were added to 2 L of pure water, which then was stirred while being warmed to 30°C so as to obtain a plating solution 'A'. Meanwhile, 30 g of glucose as a reducer was added to 1 L of pure water so as to obtain a glucose solution, to which the pretreated scaly glass base was added and stirred to obtain a plating solution 'B'.

Next, the plating solution 'B' was added to the plating solution 'A', and the mixed solution was stirred for 20 minutes so as to deposit silver on the surface of the scaly glass base by an electroless plating reaction, thereby forming a silver coating. After formation of the silver coating, it was confirmed by an ICP emission spectral analysis that 25% of the introduced silver remained in the mixture (plating solution) of the plating solution 'A' and the plating solution B'.

(Formation of silver-gold-palladium alloy coating)

Next, a coating (second coating) of silver-gold-palladium was formed on the silver coating by electroless plating in the following manner.

To the above-mentioned plating solution including the scaly glass base coated with the silver coating, 2.5 g of aqueous solution of gold sodium sulfite (concentration: 50 g/L) as a gold material and 8.2 g of aqueous solution of diamino palladium nitrite (concentration: 1.0 mass%) as a palladium material were added, and further 55 ml of aqueous solution of sodium L-ascorbate (concentration: 3 mass%) as a reducer was added thereto. Subsequently, the mixed solution was stirred for 20 minutes while being warmed up to 50°C so as to form a silver-gold-palladium alloy coating on the silver coating.

After a subsequent filtration, the scaly glass base covered with the silver coating and the silver-gold-palladium alloy coating was rinsed with water several times, and then dried at 180°C (thickness of the silver coating: 40 nm; thickness of the silver-gold-palladium alloy coating: about 10 nm). Lastly, the scaly glass base covered with the silver coating and the silver- gold-palladium alloy coating was heated at 450°C for 2 hours by using an electric muffle furnace for thermally diffusing the gold atoms and the palladium atoms of the silver-gold-palladium alloy coating into the silver coating, thereby obtaining the bright pigment of Example 1. The bright pigment of Example 1 had an average particle diameter of 35 $\mu$m, an average thickness of 1.3 $\mu$m, and it exhibited a silver-white metallic luster.

The atomic% of each metal was calculated from the result of the ICP emission spectral analysis. The values were: 99.5 atomic% for silver; 0.4 atomic% for gold; and 0.1 atomic% for palladium. The result of the secondary ion mass spectrometry indicates that gold and palladium were distributed homogeneously over the silver, from the surface of the bright pigment to the surface of the scaly glass base.

(Example 2)

The bright pigment of Example 2 has a structure in which a scaly glass base is covered with a silver-based alloy coating, just like the example shown in FIG. 1. The silver-based alloy coating is made of a silver-platinum alloy.

A bright pigment of Example 2 was produced in the same manner as Example 1 except that the gold material and the palladium material were replaced by 15 g of hexachloroplatinic acid hexahydrate (concentration: 1.0 mass%) as a platinum material, and the aqueous solution of sodium L-ascorbate (concentration: 3 mass%) was replaced by 10 g of aqueous solution of hydrazine (50 mass%) as a reducer. The bright pigment in Example 2 had an average particle diameter of 35 $\mu$m and an average thickness of 1.3 $\mu$m, and it exhibited a silver-white metallic luster.

The atomic% of each metal was calculated from the result of the ICP emission spectral analysis. The values were: 99.8 atomic% for silver; and 0.2 atomic% for platinum. The result of the secondary ion mass spectrometry indicates that platinum was distributed homogeneously over the silver, from the surface of the bright pigment to the surface of the scaly glass base.

(Example 3)

A bright pigment of Example 3 has a structure in which a scaly glass base is covered with a silver-based alloy coating, just like the example shown in FIG. 1. The silver-based alloy coating is made of a silver-gold alloy.

The bright pigment of Example 3 was produced in the same manner as Example 1 except that the palladium material was not added to the plating solution including the scaly glass base covered with the silver coating. The bright pigment in Example 3 had an average particle diameter of 35 gm and an average thickness of 1.3 pm, and it exhibited a silver-white metallic luster.

The atomic% of each metal was calculated from the result of the ICP emission spectral analysis. The values were: 99.6 atomic% for silver; and 0.4 atomic% for gold. The result of the secondary ion mass spectrometry indicates that gold was distributed homogeneously over the silver, from the surface of the bright pigment to the surface of the scaly glass base.

(Example 4)

A bright pigment of Example 4 has a structure in which a scaly glass base is covered with a silver-based alloy coating, just like the example shown in FIG. 1. The silver-based alloy coating is made of silver-gold-palladium alloy. The bright pigment of Example 4 is substantially the same as the bright pigment of Example 1 except for the atomic% of gold and palladium.

The bright pigment of Example 4 was produced in the same manner as Example 1 except that the amount of the aqueous solution of gold sodium sulfite (concentration: 50 g/L) used as a gold material was set to 7.5 g, the amount of the aqueous solution of diamino palladium nitrite (concentration: 1.0 mass%) used as a palladium material was set to 25 g, and the amount of aqueous solution of sodium L-ascorbate (concentration: 3 mass%) used as a reducer was set to 165 ml. The bright pigment in Example 4 had an average particle diameter of 35 $\mu$m and an average thickness of 1.3 $\mu$m, and it exhibited a silver-white metallic luster.

The atomic% of each metal was calculated from the result of the ICP emission spectral analysis. The values were: 98.5 atomic% for silver; 1.2 atomic% for gold; and 0.3 atomic% for palladium. The result of the secondary ion mass spectrometry indicates that gold was distributed homogeneously over the silver, from the surface of the bright pigment to the surface of the scaly glass base.

(Example 5)

A bright pigment of Example 5 has a structure in which a scaly glass base is covered with a silver-based alloy coating, just like the example shown in FIG. 1. The silver-based alloy coating is made of silver-gold alloy. The bright pigment of Example 5 is substantially the same as the bright pigment of Example 3 except for the atomic% of gold.

The bright pigment of Example 5 was produced in the same manner as Example 3 except that the amount of the aqueous solution of gold sodium sulfite (concentration: 50 g/L) used as a gold material was set to 1.3 g, and the amount of aqueous solution of sodium L-ascorbate (concentration: 3 mass%) used as a reducer was set to 28 ml. The bright pigment in Example 5 had an average particle diameter of 35 $\mu$m and an average thickness of 1.3 $\mu$m, and it exhibited a silver-white metallic luster.

The atomic% of each metal was calculated from the result of the ICP emission spectral analysis. The values were: 99.8 atomic% for silver; and 0.2 atomic% for gold. The result of the secondary ion mass spectrometry indicates that gold was distributed homogeneously over the silver, from the surface of the bright pigment to the surface of the scaly glass base.

(Comparative Example 1)

A bright pigment of Comparative Example 1 is METASHINE (registered trademark) PS series ME2040PS manufactured by Nippon Sheet Glass (average particle diameter: 35 $\mu$m, and average thickness: 1.3 $\mu$m). The bright pigment in Comparative Example 1 has a structure in which a scaly glass base is covered with a silver coating (thickness: 40 nm).

(Comparative Example 2)

A bright pigment of Comparative Example 2 has a structure in which a scaly glass base is coated with a silver-based alloy coating, just like the example shown in FIG 1. The silver-based alloy coating is made of a silver-gold-palladium alloy. The bright pigment in Comparative Example 2 is substantially the same as the bright pigment of Example 1 except for the atomic% of gold and palladium.

The bright pigment of Comparative Example 2 was produced in the same manner as Example 1 except that the amount of the aqueous solution of gold sodium sulfite (concentration: 50 g/L) used as a gold material was set to 0.2 g, the amount of the aqueous solution of diamino palladium nitrite (concentration: 1.0 mass%) used as a palladium material was set to 0.8 g, and the amount of aqueous solution of sodium L-ascorbate (concentration: 3 mass%) used as a reducer was set to 3 ml. The bright pigment in Comparative Example 2 had an average particle diameter of 35 $\mu$m and an average thickness of 1.3 $\mu$m, and it exhibited a silver-white metallic luster.

The atomic% of each metal was calculated from the result of the ICP emission spectral analysis. The values were: 99.95 atomic% for silver; 0.04 atomic% for gold; and 0.01 atomic% for palladium. The result of the secondary ion mass spectrometry indicates that gold and palladium were distributed homogeneously over the silver, from the surface of the bright pigment to the surface of the scaly glass base.

(Comparative Example 3)

A bright pigment of Comparative Example 3 has a structure in which a scaly glass base is covered with a silver-based alloy coating, just like the example shown in FIG 1. The silver-based alloy coating is made of a silver-gold-palladium alloy. The bright pigment of Comparative Example 3 is substantially the same as the bright pigment of Example 1 except for the atomic% of gold and palladium.

The bright pigment of Comparative Example 3 was produced in the same manner as Example 1 except that the amount of the aqueous solution of gold sodium sulfite (concentration: 50 g/L) used as a gold material was set to 13 g, the amount of the aqueous solution of diamino palladium nitrite (concentration: 1.0 mass%) used as a palladium material was set to 40 g, and the amount of aqueous solution of sodium L-ascorbate (concentration: 3 mass%) used as a reducer was set to 60 ml. The bright pigment in Comparative Example 3 had an average particle diameter of 35 $\mu$m and an average thickness of 1.3 $\mu$m, and it exhibited a silver-white metallic luster.

The atomic% of each metal was calculated from the result of the ICP emission spectral analysis. The values were: 97.5 atomic% for silver; 2.0 atomic% for gold; and 0.5 atomic% for palladium. The result of the secondary ion mass spectrometry indicates that gold and palladium were distributed homogeneously over the silver, from the surface of the bright pigment to the surface of the scaly glass base.

For the bright pigments of Examples 1-5 and the bright pigments of Comparative Examples 2-3, the cross sections were observed by using FE-SEM (Field Emission Scanning Electron Microscope: S-4800 manufactured by Hitachi High-Technologies). The result shows that there was no interface between the adjacent two coatings (first coating and second coating), and a single layer (silver-based alloy coating) was observed as a whole.

(Example 6)

A bright pigment of Example 6 has a structure in which a scaly glass base is covered with a first coating (silver coating) of silver and a second coating, just like the example shown in FIG. 3. The second coating is made of a silver-gold-palladium alloy. The bright pigment of Example 6 was produced similarly to Example 1 except that the heat treatment (450°C, 2 hours) as the final step in producing the bright pigment of Example 1 was not carried out.

(Example 7)

In Example 7, a scaly glass base is covered with a first coating (silver coating) made of silver and a second coating, just like the example shown in FIG. 3. The second coating is made of a silver-gold-platinum alloy.

The bright pigment in Example 7 was produced in substantially the same manner as Example 1 except for the following points. Namely, to a plating solution including the scaly glass base covered with the silver coating, 7.5 g of hexachloroplatinic acid hexahydrate (concentration: 1.0 mass%) as a platinum material was added in place of the palladium material; the heat treatment (450°C, 2 hours) as the final step in producing the bright pigment of Example 1 was not carried out.

(Example 8)

In Example 8, a scaly glass base is covered with a first coating (silver coating) made of silver and a second coating, just like the example shown in FIG. 3. The second coating is made of a silver-gold alloy. The bright pigment in Example 8 was produced similarly to Example 3 except that the heat treatment (450°C, 2 hours) as the final step in producing the bright pigment of Example 3 was not carried out.

(Example 9)

In Example 9, a scaly glass base is covered with a first coating (silver coating) made of silver and a second coating, just like the example shown in FIG. 3. The second coating is made of a silver-gold-palladium alloy. The bright pigment in Example 9 was produced similarly to Example 4 except that the heat treatment (450°C, 2 hours) as the final step in producing the bright pigment of Example 4 was not carried out.

(Example 10)

In Example 10, a scaly glass base is covered with a first coating (silver coating) made of silver and a second coating, just like the example shown in FIG. 3. The second coating is made of a silver-gold alloy. The bright pigment was produced similarly to Example 5 except that the heat treatment (450°C, 2 hours) as the final step in producing the bright pigment of Example 5 was not carried out.

(Comparative Example 4)

A bright pigment of Comparative Example 4 has a structure in which a scaly glass base is covered with a first coating (silver coating) made of silver and a second coating, just like the example shown in FIG. 3. The second coating is made of a silver-gold-palladium alloy. The bright pigment was produced similarly to Comparative Example 2 except that the heat treatment (450°C, 2 hours) as the final step in producing the bright pigment of Comparative Example 2 was not carried out.

(Comparative Example 5)

A bright pigment of Comparative Example 5 has a structure in which a scaly glass base is covered with a first coating (silver coating) made of silver and a second coating, just like the example shown in FIG. 3. The second coating is made of a silver-gold-palladium alloy. The bright pigment of Comparative Example 5 was produced similarly to Comparative Example 3 except that the heat treatment (450°C, 2 hours) as the final step in producing the bright pigment of Comparative Example 3 was not carried out.

Next, inks were produced by the method described below, respectively by using the bright pigments in Examples 1-10 and the bright pigments in Comparative Examples 1-5, and samples for evaluation were produced by using the inks.

(Production of samples for evaluation)

A resin solution of the compositions below was obtained.

| | |
|---|---|
| Polyurethane resin | 15 mass parts |
| (Synthesized from polypropylene glycol, isophorone diisocyanate (IPDI) and isophorone diamine; solids: 30%, weight average molecular weight: 50000) | |
| Polyisocyanate resin | 0.1 mass parts |
| (produced by Sumika Bayer Urethane Co., Ltd.; solids: 75%, solution of blocked polyisocyanate based on hexamethylenediisocyanate) | |
| Methyl ethyl ketone (MEK) | 40 mass parts |
| Ethyl acetate | 30 mass parts |
| Isopropyl alcohol (IPA) | 20 mass parts |
| Methyl cellosolve | 10 mass parts |

To the resin solution, 1 mass part of any of the bright pigments in Examples 1-10 and the bright pigment in Comparative Examples 1-5 was added, and the thus obtained mixture was mixed well in a kneader so as to obtain an ink containing the bright pigment.

In the meantime, ink 'A' containing a black carbon pigment of the compositions below was produced.

| | |
|---|---|
| Polyurethane resin | 15 mass parts |
| (identical to what is included in the above-mentioned resin solution) | |
| Polyisocyanate resin | 0.1 mass parts |
| (identical to what is included in the above-mentioned resin solution) | |

(continued)

| Black carbon pigment | 10 mass parts |
|---|---|
| Methyl ethyl ketone | 40 mass parts |
| Ethyl acetate | 30 mass parts |
| Isopropyl alcohol | 20 mass parts |
| Methyl cellosolve | 10 mass parts |

In the meantime, ink 'B' containing a white titanium oxide pigment of the compositions below was produced.

| Polyurethane resin | 15 mass parts |
|---|---|
| (identical to what is included in the above-mentioned resin solution) | |
| Polyisocyanate resin | 0.1 mass parts |
| (identical to what is included in the above-mentioned resin solution) | |
| Titanium oxide pigment | 10 mass parts |
| Methyl ethyl ketone | 40 mass parts |
| Ethyl acetate | 30 mass parts |
| Isopropyl alcohol | 20 mass parts |
| Methyl cellosolve | 10 mass parts |

The ink that contains the bright pigment, the ink 'A', and the ink 'B' were applied by a gravure process in this order on one surface of a biaxially stretched polyethylene terephthalate film (thickness: 12 $\mu$m). These inks were applied to have a thickness of about 1 $\mu$m respectively after drying. The drying step was carried out by using a drier, setting the atmospheric temperature inside the drier to a range of 50 to 60°C. The thus obtained laminate had a first printed layer, a second printed layer, and a third printed layer formed in this order on the biaxially stretched polyethylene terephthalate film.

Next, a resin solution prepared by dissolving a thermosetting resin-based adhesive in an organic solvent was applied on the third printed layer. The thermosetting resin-based adhesive includes a polyester resin and a block isocyanate compound. The mass ratio of the polyester resin to the block isocyanate compound was set to 100:10. To prevent the curing reaction of the thermosetting resin-based adhesive from proceeding, the applied resin solution was dried under an atmosphere of temperature of 120 to 160°C until the content of remaining organic solvent in the coating film was decreased to 3 mass% or less, thereby making the coating film as an adhesive layer. The amount of the resin solution to be applied was set so that the amount of the thermosetting resin-based adhesive to be applied would be 0.5 to 20.0 g/m$^2$ (after drying).

By using a laminator, the thus obtained gravure printed film was adhered to a metal plate (thickness: 0.3 mm; tin-nickel galvanized steel sheet) for a can material. The surface temperature of the metal plate for a can material during the sticking was set to 200°C, and the sticking load was set to 5 kgf/cm$^2$. Subsequently, printing was carried out in an oven at temperatures of 230°C and 200°C for respectively 2 minutes, thereby obtaining samples for evaluation.

(Method for testing heat sterilization)

The samples for evaluation were sterilized by using a heat sterilizer. The temperature in the heat sterilizer was set to 140°C, and the steam pressure was set to 3.5 kg/cm$^2$. The time for sterilization was 10 minutes. The interior of the heat sterilizer was wet (100%RH).

For the evaluation samples before and after the heat sterilization, the luminance (L*) and hues (a*, b*, c*) were measured respectively to calculate $\Delta$L* (luminance difference) expressed by the following (Equation 1) and the hue differences $\Delta$a*, $\Delta$b* and $\Delta$c* expressed by (Equation 2) and (Equation 3). The results are shown in Tables 1 and 2.

$$\text{(Equation 1)}$$

$$\Delta L^* = L^* \text{ (before test)} - L^* \text{ (after test)}$$

(Equation 2)

$$\Delta a^* = a^* \text{ (before test)} - a^* \text{ (after test)}$$

(Equation 3)

$$\Delta b^* = b^* \text{ (before test)} - b^* \text{ (after test)}$$

(Equation 4)

$$\Delta c^* = c^* \text{ (before test)} - c^* \text{ (after test)}$$

The luminance ($L^*$) and the hues ($a^*$, $b^*$) are the luminance ($L^*$) and the hues ($a^*$, $b^*$) of the highlight color tones mentioned below. The highlight color tones were measured in the following manner.

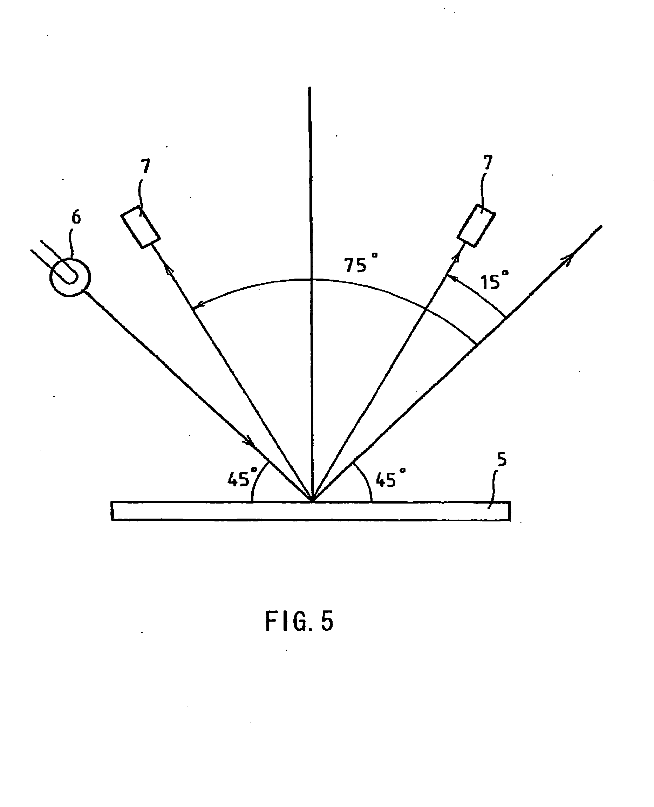

As shown in FIG. 5, an observation light source 6 was arranged at a position for allowing entrance of light at an angle of 45° with respect to the surface of a gravure printed film 5. For the observation light source 6, a D65 light source was used. Light was emitted from the observation light source 6 in order to measure the color tones of the reflected light by using a detector 7.

The detector 7 was arranged at a position for receiving reflected light (the color tone of this reflected light is called "highlight color tone") in a direction shifted by 15° from the direction of mirror reflection of the incident light (that is, a direction of 45° with respect to the surface of the gravure printed film 5) to the observation light source side.

The quantities of light mirror-reflected by the bright pigment and the gravure printed film are so great that the color development of the bright pigment is difficult to check. In an observation at an angle shifted by 15° from the mirror reflection direction, the influence of the mirror reflection on the gravure printed film is suppressed, and thus the color tone due to the reflection of the bright pigment can be measured.

[Table 1]

|  | Ex. 1 | Ex. 2 | Ex. 3 | Ex. 4 | Ex. 5 | Com. Ex. 1 | Com. Ex. 2 | Com. Ex. 3 |
|---|---|---|---|---|---|---|---|---|
| Composi- | Ag-Au-Pd | Ag-Pt | Ag-Au | Ag-Au-Pd | Ag-Au | Ag | Ag-Au-Pd | Ag-Au-Pd |
| $L^*$(B.T.) | 58.5 | 56.7 | 58.3 | 58.2 | 58.9 | 58.4 | 58.8 | 53.6 |
| $a^*$(B.T.) | 0.3 | -0.1 | 0 | 0.9 | 0.1 | -0.9 | 0.2 | 1.1 |
| $b^*$(B.T.) | 0.5 | 0.3 | 0.5 | 1.2 | 0.3 | 3.8 | 2.5 | 2.8 |
| $c^*$(B.T.) | 0.6 | 0.3 | 0.5 | 1.5 | 0.3 | 3.9 | 2.5 | 3.0 |
| $L^*$(A.T.) | 57.8 | 55.9 | 57.4 | 57.8 | 57.9 | 35.9 | 38.5 | 53.3 |
| $a^*$(A.T.) | 0.5 | 0.1 | 0.3 | 0.7 | 0.3 | 0.4 | 0.2 | 0.9 |
| $b^*$(A.T.) | 0.4 | 0.4 | 0.4 | 0.7 | 0.4 | 2.8 | 2.1 | 2.1 |
| $c^*$(A.T.) | 0.6 | 0.4 | 0.5 | 1.0 | 0.5 | 2.8 | 2.1 | 2.3 |
| $\Delta L^*$ | 0.7 | 0.8 | 0.9 | 0.4 | 1.0 | 22.5 | 20.3 | 0.3 |
| $\Delta a^*$ | -0.2 | -0.2 | -0.3 | 0.2 | -0.2 | -1.3 | 0 | 0.2 |
| $\Delta b^*$ | 0.1 | -0.1 | 0.1 | 0.5 | -0.1 | 1.0 | 0.4 | 0.7 |
| $\Delta c^*$ | 0 | -0.1 | 0.0 | 0.5 | -0.2 | 1.1 | 0.4 | 0.7 |
| Atomic% of X* | 0.5 | 0.2 | 0.4 | 1.5 | 0.2 | 0 | 0.05 | 2.5 |

Note: B.T denotes 'Before Test' and A.T. denote 'After Test'.

* X denotes at least one noble metal selected from the group consisting ofAu, Pd and Pt.

[Table 2]

| Composi- Tion | Ex. 6 | Ex. 7 | Ex. 8 | Ex. 9 | Ex. 10 | Com. Ex.4 | Com. Ex.5 |
|---|---|---|---|---|---|---|---|
| | Ag-Au-Pd | Ag-Au-Pt | Ag-Au | Ag-Au-Pd | Ag-Au | Ag-Au-Pd | Ag-Au-Pd |
| L*(B.T.) | 54.3 | 54.0 | 53.8 | 53.3 | 56.4 | 57.4 | 51.6 |
| a*(B.T.) | 1 | 0.8 | 1.1 | 0.9 | 0.3 | 0.2 | 1.7 |
| b*(B.T.) | 24 | 1.9 | 2.2 | 2.9 | 0.5 | 3.5 | 4.6 |
| c*(B.T.) | 2.6 | 2.1 | 2.5 | 3.0 | 0.6 | 3.5 | 4.9 |
| L*(A.T.) | 58.2 | 57.6 | 57.9 | 57.1 | 55.3 | 39.7 | 52.3 |
| a*(A.T.) | 0.4 | 0.3 | 0.4 | 0.6 | 0.3 | 0.4 | 0.9 |
| b*(A.T.) | 0.7 | 0.5 | 0.6 | 1.1 | 0.4 | 2.9 | 3.1 |
| c*(A.T.) | 0.8 | 0.6 | 0.7 | 1.3 | 0.5 | 2.9 | 3.2 |
| ΔL* | -3.9 | -3.6 | -4.1 | -3.8 | 1.1 | 17.7 | -0.7 |
| Δa* | 0.6 | 0.5 | 0.7 | 0.3 | 0 | -0.2 | 0.8 |
| Δb* | 1.7 | 1.4 | 1.6 | 1.8 | 0.1 | 0.6 | 1.5 |
| Δc* | 1.8 | 1.5 | 1.8 | 1.7 | 0.1 | 0.6 | 1.7 |
| Atomic% of X* | 0.5 | 0.5 | 0.4 | 1.5 | 0.2 | D.05 | 2.5 |

Note: B.T. denotes 'Before Test' and A.T. denote 'After Test'. * X denotes at least one noble metal selected from the group consisting of Au, Pd and Pt.

A bigger L* value denotes higher luminance. When the L* value is bigger and the values of a* and b* are closer to zero, the color of reflected light appears to be whitish. When the ΔL* is smaller, deterioration in the luminance is small.

As shown in the result in Table 1, the bright pigments in Examples 1-5 (before test) where the noble metal is included at a rate of 0.1 to 2 atomic% have luminance of the substantially same level as the bright pigment (before test) of Comparative Example 1 where the scaly glass base is covered with a silver coating, and more whitish than the bright pigments (before test) in Comparative Examples 1-4.

Further, as shown in the results in Table 1, for the bright pigments in Examples 1-5, the luminance did not deteriorate substantially even after the test (i.e., even after exposure to a high temperature humidity environment). In contrast, for the bright pigment in Comparative Example 1, the luminance deteriorated considerably after the test.

To the contrary, as shown in the result in Table 2, the luminances (L*) of the bright pigments (after test) in Examples 6-9 were higher than the same luminance before test. That is, the luminance of the bright pigment in each of Examples 6-9 was improved by being kept in a high temperature-humidity environment. The luminance (L*) of the bright pigment in Example 10 was lower after the test, but the degree was negligible.

For the bright pigments in Examples 6-10, the values of a* and b* after the test became closer to zero in comparison with the values before the test. Namely, for the bright pigments in Examples 6-10, the color of reflected light became more whitish after being exposed to a high temperature-humidity environment.

In contrast, for the bright pigment in Comparative Example 4, the luminance of the bright pigment was lowered considerably after the test. For the bright pigment in Comparative Example 5, the color of the reflected light did not become whitish sufficiently even after the test.

<Colored bright pigment>

(Example 11)

A bright pigment 'B' of Example 11 has a structure in which a scaly glass base is covered with a silver-based coating and a blue coating in this order, just like the example shown in FIG. 2. The silver-based coating is made of a silver-gold-palladium alloy. The parent material composing the blue coating is made of silica. This bright pigment was produced in the following manner.

(Scaly glass base)

A scaly glass base having an average particle diameter of 32 $\mu$m and an average thickness of 1.3 $\mu$m was prepared. The scaly glass base was obtained by pulverizing a glass piece with a pulverizer (the glass piece had been formed from a molten glass by ballooning), and classifying the thus pulverized glass piece with a vibration sieve, an ultrasonic sieve, and an airflow classifier.

Next, in substantially the same manner as the case of producing the bright pigment in Example 1, the silver coating (first coating) was formed on the scaly glass base and further a silver-gold-palladium alloy coating (second coating) was formed, which then was treated with heat so as to obtain a bright pigment 'A' having the same structure as the bright pigment shown in FIG. 1. This bright pigment 'A' had an average particle diameter of 35 $\mu$m and an average thickness of 1.3 $\mu$m, and it exhibited a silver-white metallic luster. In an observation with FE-SEM, there was no interface between the silver coating and the silver-gold-palladium alloy coating, and thus it can be regarded as a single layer of silver-gold-palladium alloy coating (silver-based alloy coating) as a whole.

The compositions of the silver-gold-palladium alloy were calculated from the result of the ICP emission spectral analysis. The values were: 99.3 atomic% for silver; 0.6 atomic% for gold; and 0.2 atomic% for palladium. The result of the secondary ion mass spectrometry indicates that gold and palladium were distributed homogeneously over the silver, from the surface of the bright pigment to the surface of the scaly glass base.

(Formation of silica coating containing blue pigment)

Next, a coating containing a blue colourant for covering the bright pigment 'A' was formed by a sol-gel method as described below. First, 15 ml of tetraethoxysilane, 300 ml of isopropyl alcohol (IPA) and 60 ml of pure water were mixed. To the thus obtained mixture solution, 9 g of solution containing 10 mass% of Pigment Blue 15:3 defined by C.I.G.N. (blue pigment, average particle diameter: about 100 nm) was added, which then was mixed to obtain a solution for forming a silica coating.

To this solution for forming silica coating, 30 g of bright pigment 'A' was added, which then was stirred and mixed by a stirrer. Subsequently, 14 ml of ammonium hydroxide solution (concentration: 25 mass%) was added to this solution for forming silica coating, and the solution for forming silica coating was stirred for 2 to 3 hours for dehydration and condensation reaction. In this manner, a silica coating with the blue pigment dispersed therein was deposited homogeneously on the surface of a scaly glass base in the solution for forming silica coating.

Next, the bright pigment 'A' covered with the silica coating (thickness: 100 nm) with the blue pigment dispersed therein was collected through filtration, which then was dried by applying heat of 180°C for 2 hours. The thus obtained bright pigment 'B' had a structure in which a scaly glass base was coated with a silver-based coating and a blue coating in this order. This bright pigment 'B' exhibited a color tone emitting a vivid blue light with high chroma.

(Comparative Example 6)

In Comparative Example 6, a scaly glass base is coated with a silver coating and a silica coating in this order, where the silica coating includes a blue pigment dispersed therein. For the scaly glass base covered with a silver coating (thickness: 40 nm), METASHINE (registered trademark) PS series ME2040PS manufactured by Nippon Sheet Glass was used. The silica coating having a blue pigment dispersed therein is produced in the same manner as the silica coating having a blue pigment that composes the bright pigment 'B' of Example 11. This bright pigment exhibited a color tone of green with low chroma.

(Example 12)

The bright pigment 'C' of Example 12 has a structure in which a scaly glass base is covered with a silver-based alloy coating and a red coating in this order, just like the example shown in FIG. 2. The silver-based alloy coating is made of a silver-gold-palladium alloy. The parent material for composing the red coating is made of aluminum hydroxide. The bright pigment 'C' was produced in the following manner.

(Formation of aluminum hydroxide coating containing red dye)

A red coating for covering the bright pigment 'A' (see Example 11) was formed in the following manner. First, an aqueous solution of 10 mass% of aluminum nitrate (III) nonahydrate was prepared. In the meantime, about 30 g of the bright pigment 'A' was added to 0.3 L of purified water so as to obtain a suspension, and the thus obtained suspension was kept at 75°C in a water bath, and the pH of the suspension was adjusted to 6 by using diluted nitric acid. Next, 20 g of aqueous solution of the above-mentioned aluminum nitrate (III) nonahydrate and 8 g of aqueous solution of sodium hydroxide (10 mass%) were added to this suspension slowly in 10 minutes. After the addition of these aqueous solutions, the suspension was stirred continuously for 30 minutes while keeping the temperature of the suspension at 75°C and the pH at 6. Later, the suspension was filtered with a paper filter and the thus obtained solid was rinsed with water, thereby obtaining the bright pigment 'A' covered with the aluminum hydroxide coating.

Subsequently, 30 g of the bright pigment 'A' covered with the aluminum hydroxide coating was added to 0.3 L of purified water. While keeping the temperature of the thus obtained suspension at 70°C in a water bath, 30 g of a solution containing 10 mass% of Pigment Red 57 (Red No. 202) was added to this suspension. After the addition of this solution, the suspension was stirred continuously for 15 minutes while keeping the temperature of the suspension at 70°C and the pH at 6. Later, the suspension was filtered with a paper filter and the thus obtained solid was dried, and the filtered solid was heated at 120°C for 2 hours. In this manner, the bright pigment 'C' having aluminum hydroxide (parent material, thickness: 30 mm) with a red dye dispersed therein was obtained. The bright pigment 'C' exhibited a color tone of vivid red light with high chroma.

(Comparative Example 7)

In Comparative Example 7, a scaly glass base is covered with a silver coating (thickness: 40 nm) and an aluminum hydroxide coating (thickness: 30 nm) in this order, where the aluminum hydroxide coating has a red dye dispersed therein. For the scaly glass base covered with the silver coating, METASHINE (registered trademark) PS series ME2040PS manufactured by Nippon Sheet Glass was used. The aluminum hydroxide coating having a red pigment dispersed therein is produced in the same manner as the aluminum hydroxide coating having a red pigment that composes the bright pigment 'C' of Example 12. This bright pigment exhibited an orange color tone with low chroma.

(Example 13)

The bright pigment 'D' of Example 13 has a structure in which a scaly glass base is covered with a silver-based alloy coating and a red coating in this order, just like the example shown in FIG. 2. The silver-based alloy coating is made of a silver-gold-palladium alloy. The parent material for composing the red coating is made of hydrotalcite. The bright pigment 'D' was produced in the following manner.

(Formation of hydrotalcite coating containing red dye)

An adjusting liquid was prepared by dissolving 3 g of aluminum chloride hexahydrate and 5 g of magnesium chloride hexahydrate in 50 ml of purified waster. In the meantime, a suspension was obtained by adding about 30 g of bright pigment 'A' (see Example 11) and 30 g of a solution containing 10 mass% of Pigment Red 57 (Red No. 202) to 0.3 L of purified water. While keeping the temperature of the thus obtained suspension at 75°C in a water bath, the above-mentioned adjusting liquid was dropped completely in 10 minutes into the suspension. During the dropping of the adjusting liquid, the pH of the suspension was kept at 6 by using an aqueous solution of sodium hydroxide (10 mass%). Consecutively, the suspension was stirred at 90°C for 30 minutes while keeping the pH at 6.
Later, the suspension was filtered with a paper filter and the thus obtained solid was dried, and the filtered solid was heated at 120°C for 2 hours. In this manner, the bright pigment 'D' having hydrotalcite (parent material, thickness: 30 mm) with a red dye dispersed therein was obtained. The bright pigment 'D' exhibited a color tone of vivid red light with high chroma.

(Comparative Example 8)

In Comparative Example 8, a scaly glass base is covered with a silver coating (thickness: 40 nm) and a hydrotalcite coating (thickness: 30 nm) in this order, where the hydrotalcite coating has a red dye dispersed therein. For the scaly glass base covered with the silver coating, METASHINE (registered trademark) PS series ME2040PS manufactured by Nippon Sheet Glass was used. The hydrotalcite coating having a red dye dispersed therein is produced in the same manner as the hydrotalcite coating having a red dye that composes the bright pigment 'D' of Example 13. This bright pigment exhibited an orange color tone with low chroma.

(Production of samples for evaluating cosmetics)

Paints were obtained by mixing in a kneader 100 mass parts of nail polish composition in Table 3 below and 5 mass% of the colored bright pigments in any of Examples 11-13 and Comparative Examples 7-8. Each paint was applied on a commercially available black-and-white shielding paper so that the coating film would have a thickness of 9 mil (9/1000 × 25.4 mm), and the coating film was air-dried. The color tones were evaluated by using the air-dried coating films as samples for evaluation.
[Table 3]

| Nail polish composition | Mass parts |
|---|---|
| isopropanol | 5 |
| ethyl acetate | 22 |
| cellulose nitrate (30 mass% solvent- isopropyl alcohol) | 11 |
| stearyl benzyl dimethylammonium modified hectorite | 1.5 |
| acetyl tributyl citrate | 1.8 |
| N-ethyl-O,P-toluene sulfonamide | 2.6 |
| alkyd resin (30mass% solvent ethyl acetate) | 13 |
| butyl acetate | 45 |
| aqueous solution of citric acid (mass ratio of citric acid to water =1:1) | 0.1 |
| Total | 100 |

(Color tone evaluation)

For the coating film applied on the black-and-white shielding paper, L*, a*, b* and c* were measured by using a colorimeter (L*a*b* color system, CR400 manufactured by Konica Minolta Sensing, Inc.). Further, the hue angle h° and the hue difference Δh° were calculated by means of the following (Equation 5). The results are shown in Tables 4 and 5. A C-light source was used for the observation light source.

$$(\text{Equation 5})$$

$$\Delta h° = h° \ (\text{before test}) - h° \ (\text{after test})$$

$$h° = \tan^{-1}(b^*/a^*)$$

Blue colorant

[Table 4]

| | Example 11 | Com. Ex. 6 |
|---|---|---|
| Composition | Ag-Au-Pd | Ag |
| L* | 67.4 | 67.2 |
| a* | -18.5 | -19.8 |
| b* | -17.4 | -14.3 |
| c* | 25.4 | 24.4 |
| h° | 223.2 | 215.8 |
| Atomic% of X* | 0.8 | 0 |

* X denotes at least one noble metal selected from the group consisting ofAu, Pd and Pt.

Red colorant

[Table 5]

| | Ex.12 | Ex.13 | Com.Ex.7 | Com.Ex.8 |
|---|---|---|---|---|
| | Ag-Au-Pd | Ag-Au-Pd | Ag | Ag |
| L* | 58.8 | 58.0 | 58.5 | 57.8 |
| a* | 31.5 | 32.1 | 29.0 | 28.7 |
| b* | 0.3 | 0.1 | 1.8 | 2.1 |

(continued)

|  | Ex.12 | Ex.13 | Com.Ex.7 | Com.Ex.8 |
|---|---|---|---|---|
|  | Ag-Au-Pd | Ag-Au-Pd | Ag | Ag |
| c* | 31.5 | 32.1 | 29.1 | 28.8 |
| h° | 0.5 | 0.2 | 3.6 | 4.2 |
| Atomic% of X* | 0.8 | 0.8 | 0 | 0 |
| * X denotes at least one noble metal selected from the group consisting ofAu, Pd and Pt. | | | | |

When the h° value is closer to 270°, the reflected light exhibits a blue color with higher chroma. When the h° value is closer to 180°, yellow ingredients are added to the blue ingredients, and thus the reflected light exhibits a green color with high chroma. As shown from the results in Table 4, the h° value of the bright pigment in Example 11 is closer to 270° than that in Comparative Example 6. This indicates that the bright pigment in Example 11 exhibits a blue color tone with higher chroma in comparison with the bright pigment in Comparative Example 6. And the bright pigment in Example 11 has chroma c* higher than that of the bright pigment in Comparative Example 6.

When the h° value is closer to 0°, the reflected light exhibits a red color with higher chroma. When the h° value is closer to 90°, yellow ingredients are added to the red ingredients, and thus the reflected light exhibits an orange color with higher chroma. As shown from the results in Table 5, the h° value of the bright pigment in Example 12 is more approximate to 0° than that in Comparative Example 7; the h° value of the bright pigment in Example 13 is more approximate to 0° than that in Comparative Example 8. This indicates that the bright pigments in Examples 12, 13 exhibit red color tones with higher chroma in comparison with the bright pigments in Comparative Examples 7, 8. And the bright pigment in each of Examples 12, 13 has chroma c* higher than that of the bright pigment in each of Comparative Examples 7, 8.

Industrial Applicability

The bright pigment of the present invention has favorable metallic luster with suppressed yellowish color in the reflected light by increasing the reflectance with respect to light at the short wavelength side (500 nm or less) of visible light. Therefore, by covering with a colored coating including an organic colorant, a bright pigment that develops colors with high chroma without sacrificing the color development of the organic colorant can be provided. As a result, the bright pigment of the present invention can be used favorably for various applications such as ink, paint, cosmetics, and resin compositions. In addition to that, since the degradation in luminance is suppressed in the bright pigment of the present invention even when exposed to a high temperature-humidity environment, for example, the bright pigment can be used particularly preferably for an ink material to be printed on an outer surface of an object to be heat sterilized and then heat-sterilized together with the object.

**Claims**

1.  A bright pigment comprising a scaly inorganic base; and a silver-based alloy coating that covers the inorganic base and that comprises silver and at least one noble metal selected from the group consisting of gold, palladium and platinum,
    the content of the noble metal being in a range of 0.1 to 2 atomic% when the sum of the atomic% of the silver and the atomic% of the noble metal is 100 atomic%.

2.  The bright pigment according to claim 1, wherein the atoms at lattice points of the silver are substituted with atoms of the noble metal.

3.  The bright pigment according to claim 1, wherein the silver-based alloy coating comprises an alloy selected from a silver-gold alloy, a silver-palladium alloy, a silver-platinum alloy, a silver-gold-palladium alloy, a silver-platinum-palladium alloy, and a silver-gold-platinum alloy.

4.  The bright pigment according to claim 1, wherein the noble metal is included in the silver-based alloy coating at a concentration distribution that the concentration of the noble metal is increased at a position closer to the outermost surface of the silver-based alloy coating.

5. The bright pigment according to claim 1, wherein the silver-based alloy coating has a thickness in a range of 20 nm to 100 nm.

6. The bright pigment according to claim 1, further comprising a colored coating that covers the silver-based alloy coating and that comprises an organic colorant and a parent material.

7. The bright pigment according to claim 6, wherein the organic colorant is a water-soluble colorant, and the parent material comprises at least one selected from the group consisting of aluminum hydroxide, zirconium hydroxide, calcium hydroxide, hydrated aluminum oxide, hydrated zirconium oxide, hydrated calcium oxide, and hydrotalcite.

8. The bright pigment according to claim 6, wherein the organic colorant is a water-insoluble colorant, and the parent material comprises silica.

9. The bright pigment according to claim 1, wherein the inorganic base comprises at least one material selected from the group consisting of glass, mica, synthetic mica, silica and alumina.

10. A cosmetic, paint, ink or resin composition comprising the bright pigment according to any one of claims 1-9.

11. A method for producing the bright pigment according to claim 1, the method comprising steps of
forming a first coating that covers the inorganic base and that comprises silver;
forming a second coating that covers the first coating and that comprises silver and at least one noble metal selected from the group consisting of gold, palladium and platinum;
heating the first coating and the second coating for a predetermined time period under a predetermined temperature atmosphere so as to substitute atoms at lattice points of the silver with atoms of the noble metal, thereby forming the silver-based alloy coating,
where the content of the noble metal is in a range of 0.1 to 2 atomic% when the sum of the atomic% of the silver and the atomic% of the noble metal in the silver-based alloy coating is 100 atomic%.

12. The method for producing the bright pigment according to claim 11, wherein the predetermined temperature is in a range of 350 to 600°C.

13. The method for producing the bright pigment according to claim 11, wherein the predetermined time period is in a range of 0.1 to 10 hours.

14. A bright pigment according to claim 1 for use as a material of an ink that is printed on an object to be exposed to a high temperature-humidity environment and exposed together with the object to the high temperature-humidity environment, the bright pigment comprising:

   a scaly inorganic base;
   a first coating that covers the inorganic base and comprises silver;
   and
   a second coating that covers the first coating and that comprises silver and at least one noble metal selected from the group consisting of gold, palladium and silver,
   the content of the noble metal being in a range of 0.1 to 2 atomic% when the sum of the atomic% of the silver contained in the first coating, the atomic% of the silver contained in the second coating and the atomic% of the noble metal is 100 atomic%.

15. An ink comprising the bright pigment according to claim 14.


**Patentansprüche**

1. Helles Pigment, das enthält: eine schuppige anorganische Basis; und einen Legierungsüberzug auf Silberbasis, der die anorganische Basis überzieht und der Silber und wenigstens ein Edelmetall, das aus der Gruppe gewählt ist, die aus Gold, Palladium und Platin besteht, enthält,

wobei der Gehalt des Edelmetalls im Bereich von 0,1 bis 2 Atom-% liegt, wenn die Summe der Atom-% von Silber und der Atom-% des Edelmetalls 100 Atom-% beträgt.

2. Helles Pigment nach Anspruch 1, wobei die Atome an Gitterpunkten von Silber durch Atome des Edelmetalls ersetzt sind.

3. Helles Pigment nach Anspruch 1, wobei der Legierungsüberzug auf Silberbasis eine Legierung enthält, die ausgewählt ist aus einer Silber-Gold-Legierung, einer Silber-Palladium-Legierung, einer Silber-PlatinLegierung, einer Silber-Gold-Palladium-Legierung, einer Silber-Platin-Palladium-Legierung und einer Silber-Gold-Platin-Legierung.

4. Helles Pigment nach Anspruch 1, wobei das Edelmetall in dem Silberüberzug auf Silberbasis mit einer Konzentrationsverteilung enthalten ist, derart, dass die Konzentration des Edelmetalls an einer Position näher bei der äußersten Oberfläche des Legierungsüberzugs auf Silberbasis erhöht ist.

5. Helles Pigment nach Anspruch 1, wobei der Legierungsüberzug auf Silberbasis eine Dicke im Bereich von 20 nm bis 100 nm hat.

6. Helles Pigment nach Anspruch 1, das ferner einen farbigen Überzug aufweist, der den Legierungsüberzug auf Silberbasis überzieht und der einen organischen Farbstoff und ein Ausgangsmaterial enthält.

7. Helles Pigment nach Anspruch 6, wobei der organische Farbstoff ein wasserlöslicher Farbstoff ist und das Ausgangsmaterial wenigstens ein Material enthält, das aus der Gruppe gewählt ist, die besteht aus Aluminiumhydroxid, Zirkonhydroxid, Calciumhydroxid, hydriertem Aluminiumoxid, hydriertem zirkonoxid, hydriertem Calciumoxid und Hydrotalcid.

8. Helles Pigment nach Anspruch 6, wobei der organische Farbstoff ein wasserunlöslicher Farbstoff ist und das Ausgangsmaterial Siliciumoxid enthält.

9. Helles Pigment nach Anspruch 1, wobei die anorganische Basis wenigstens ein Material aus der Gruppe enthält, die besteht aus Glas, Glimmer, synthetischem Glimmer, Siliciumoxid und Alumniniumoxid.

10. Kosmetik-, Farb-, Tinten- oder Harzzusammensetzung, die das helle Pigment nach einem der Ansprüche 1-9 enthält.

11. Verfahren für die Herstellung des hellen Pigments nach Anspruch 1, wobei das Verfahren die folgenden Schritte umfasst:

Bilden eines ersten Überzugs, der die anorganische Basis überzieht und der Silber enthält;
Bilden eines zweiten Überzugs, der den ersten Überzug überzieht und der Silber und wenigstens ein Edelmetall enthält, das aus der Gruppe gewählt ist, die aus Gold, Palladium und Platin besteht;
Erhitzen des ersten Überzugs und des zweiten Überzugs für eine vorbestimmte Zeitdauer in einer vorbestimmten Temperaturatmosphäre, so dass Atome an Gitterpunkten von Silber durch Atome des Edelmetalls ersetzt werden, um **dadurch** einen Legierungsüberzug auf Silberbasis zu bilden,
wobei der Gehalt des Edelmetalls im Bereich von 0,1 bis 2 Atom-% liegt, wenn die Summe der Atom-% von Silber und der Atom-% des Edelmetalls in dem Legierungsüberzug auf Silberbasis 100 Atom-% beträgt.

12. Verfahren zum Herstellen des hellen Pigments nach Anspruch 11, wobei die vorbestimmte Temperatur im Bereich von 350 bis 600 °C liegt.

13. Verfahren für die Herstellung des hellen Pigments nach Anspruch 11, wobei die vorbestimmte Zeitdauer im Bereich von 0,1 bis 10 Stunden liegt.

14. Helles Pigment nach Anspruch 1 für die Verwendung als Material einer Tinte, die auf ein Objekt gedruckt wird, das einer feuchten Hochtemperaturumgebung ausgesetzt werden soll und zusammen mit dem Objekt der feuchten Hochtemperaturumgebung ausgesetzt wird, wobei das helle Pigment enthält:

eine schuppige anorganische Basis;
einen ersten Überzug, der die anorganische Basis überzieht und Silber enthält; und
einen zweiten Überzug, der den ersten Überzug überzieht und Silber sowie wenigstens ein Edelmetall enthält, das aus der Gruppe gewählt ist, die aus Gold, Palladium und Silber besteht;
wobei der Gehalt des Edelmetalls im Bereich von 0,1 bis 2 Atom-% liegt, wenn die Summe der Atom-% von Silber, das im ersten Überzug enthalten ist, der Atom-% von Silber, das im zweiten Überzug enthalten ist, und der Atom-% des Edelmetalls 100 Atom-% beträgt.

**15.** Tinte, die das helle Pigment nach Anspruch 14 enthält.


**Revendications**

**1.** Pigment brillant comprenant : une base minérale écailleuse ; et un revêtement d'alliage à base d'argent qui recouvre la base minérale et qui comprend de l'argent et au moins un métal noble choisi dans le groupe constitué par l'or, le palladium et le platine,
la teneur en métal noble étant dans une plage de 0,1 à 2 % en atomes lorsque la somme du pourcentage atomique de l'argent et du pourcentage atomique du métal noble est de 100 % en atomes.

**2.** Pigment brillant selon la revendication 1, dans lequel les atomes d'argent au niveau des points de réseau sont remplacés par des atomes du métal noble.

**3.** Pigment brillant selon la revendication 1, dans lequel le revêtement d'alliage à base d'argent comprend un alliage choisi parmi un alliage argent-or, un alliage argent-palladium, un alliage argent-platine, un alliage argent-or-palladium, un alliage argent-platine-palladium et un alliage argent-or-platine.

**4.** Pigment brillant selon la revendication 1, dans lequel le métal noble est incorporé dans le revêtement d'alliage à base d'argent à une distribution de concentration à laquelle la concentration du métal noble est accrue dans une position plus proche de la surface extérieure du revêtement d'alliage à base d'argent.

**5.** Pigment brillant selon la revendication 1, dans lequel le revêtement d'alliage à base d'argent a une épaisseur dans une plage de 20 nm à 100 nm.

**6.** Pigment brillant selon la revendication 1, comprenant en outre un revêtement coloré qui recouvre le revêtement d'alliage à base d'argent et qui comprend un colorant organique et un matériau parent.

**7.** Pigment brillant selon la revendication 6, dans lequel le colorant organique est un colorant soluble dans l'eau, et le matériau parent comprend au moins un composé choisi dans le groupe constitué par l'hydroxyde d'aluminium, l'hydroxyde de zirconium, l'hydroxyde de calcium, l'oxyde d'aluminium hydraté, l'oxyde de zirconium hydraté, l'oxyde de calcium hydraté et l'hydrotalcite.

**8.** Pigment brillant selon la revendication 6, dans lequel le colorant organique est un colorant insoluble dans l'eau, et le matériau parent comprend de la silice.

**9.** Pigment brillant selon la revendication 1, dans lequel la base minérale comprend au moins un matériau choisi dans le groupe constitué par le verre, le mica, le mica synthétique, la silice et l'alumine.

**10.** Composition cosmétique, de peinture, d'encre ou de résine comprenant le pigment brillant selon l'une quelconque des revendications 1 à 9.

**11.** Procédé de production du pigment brillant selon la revendication 1, le procédé comprenant les étapes de :

formation d'un premier revêtement qui recouvre la base minérale et qui comprend de l'argent ;
formation d'un second revêtement qui recouvre le premier revêtement et qui comprend de l'argent et au moins un métal noble choisi dans le groupe constitué par l'or, le palladium et la platine ;
le chauffage du premier revêtement et du second revêtement pendant une période de temps prédéterminée dans une atmosphère à une température prédéterminée, de façon à remplacer des atomes d'argent au niveau des
points de réseau par des atomes du métal noble, afin de former un revêtement d'alliage à base d'argent,
dans lequel la teneur en métal noble est dans une plage de 0,1 à 2 % en atomes lorsque la somme du pourcentage atomique de l'argent et du pourcentage atomique du métal noble dans le revêtement d'alliage à base d'argent est de 100 % en atomes.

**12.** Procédé de production du pigment brillant selon la revendication 11, dans lequel la température prédéterminée est dans une plage de 350 à 600°C.

**13.** Procédé de production du pigment brillant selon la revendication 11, dans lequel la période de temps prédéterminée est dans une plage de 0,1 à 10 heures.

**14.** Pigment brillant selon la revendication 1 destiné à une utilisation comme matériau d'une encre qui est imprimée sur un objet à exposer à un environnement de température élevée et de forte humidité et exposé avec l'objet à l'environnement de température élevée et de forte humidité, le pigment brillant comprenant :

une base minérale écailleuse ;
un premier revêtement qui recouvre la base minérale et qui comprend de l'argent ; et
un second revêtement qui recouvre le premier revêtement et qui comprend de l'argent et au moins un métal noble choisi dans le groupe constitué par l'or, le palladium et l'argent,
la teneur en métal noble étant dans une plage de 0,1 à 2 % en atomes lorsque la somme du pourcentage atomique de l'argent contenu dans le premier revêtement, du pourcentage atomique de l'argent contenu dans le second revêtement et du pourcentage atomique du métal noble est de 100 % en atomes.

**15.** Encre comprenant le pigment brillant selon la revendication 14.

FIG. 1

FIG. 2

2

10    40    50

FIG. 3

2

10    40    50    60

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H09188830 A
- JP H10158540 A
- JP H10158541 A
- JP 2001270805 A
- JP 2003509530 A
- DE 2429762
- US 4084983 A
- JP 2002188023 A
- JP 2002194247 A
- JP 2001234090 A
- JP 2003213156 A
- JP H0517105 A
- JP H07133211 A
- JP 2006176742 A